# EUROPEAN PATENT APPLICATION

(11) **EP 4 535 528 A1**
(43) Date of publication of application: **09.04.2025**
(21) Application number: 24204378.4
(22) Date of filing: 02.10.2024
(51) Int. Cl.: H01M 50/209, H01M 50/242, H01M 50/244

(54) **IMPROVED BATTERY**

(30) Priority: 03.10.2023 IT 202300020457
(71) Applicant: Liber S.r.l., 40127 Bologna (IT)
(72) Inventor: FRIGERIO, Luca, 48015 CERVIA (RAVENNA) (IT)
(74) Representative: Conti, Marco

(57) **Abstract**

Described is an improved battery comprising a plurality of prismatic cells and a casing, wherein the cells are positioned in such a way as to form a stack, and the casing completely covers the stack and applies a preloading force on the stack, in such a way as to limit the deformation of the stack inside the casing. This invention also relates to a method for assembling the battery and a template for actuating the method.

## Description

This invention relates to an improved battery which is simple, inexpensive, easy to assemble and disassemble, whilst maintaining the characteristics, such as, for example, mechanical strength, rigidity and/or protection from external agents, necessary for compliance with the current regulations on battery safety.

Reference will be made mainly in the following description to batteries comprising cells with a prismatic shape. It should, however, be borne in mind that the improved battery according to this invention could comprise cells of another shape (for example, like cartons, pouches or cylindrical), always remaining within the scope of protection defined by the appended claims.

Again, in this description use will often be made of the expression "completely surround", which, in the sense of the invention, must be interpreted as "completely covering the outer surface of an object".

There are prior art batteries comprising a plurality of prismatic cells positioned in such a way as to form a stack.

For example, patent application US2008/0280194 A1 shows a battery made using a plurality of prismatic cells grouped in a stack. The cells of a stack are held together by containment elements, also called tensioning elements or constraints, such as, for example, bolts, screws, brackets, straps or belts, which limit the movement of the individual cells inside a stack. As well as limiting the movement, the containment elements prevent the individual cells from deforming, applying a preloading force on them. In effect, in the case of a fault, the cells can generate gases inside them, which are expelled by safety valves present in the cells. For this reason, in the event of a fault and in the absence of the containment elements (therefore in the absence of the preloading force), the cells could deform under the pushing action of the gases, inhibiting, in effect, the safety valves, and thereby creating a hazardous situation.

Also known are batteries comprising a plurality of prismatic cells, positioned in such a way as to form a stack, inserted inside a casing.

For example, patent application US 2012/0251863 A1 shows a casing for batteries. The casing, made of composite material, completely surrounds the plurality of cells, which are positioned and connected in such a way as to form a stack. In particular, the aim of the casing is to protect the stack from any impacts due to accidents and, therefore, it must have predetermined mechanical strength and rigidity characteristics.

However, the casing does not act as a containment element, that is to say, it does not apply any preloading force on said stack, but only has a protective function with respect to outside events and forces.

Patent application US 2016/329538 A1 shows, on the other hand, a casing positioned in such a way as to completely surround the plurality of cells, in such a way as to isolate them from the outside environment, guaranteeing, for example, protection against dust, water or any other external agent specified by the current regulations.

Also according to this example, the casing does not act as a containment element, that is to say, it does not apply any preloading force on said stack, but only has a protective function relative to external agents.

For this reason, according to the prior art, the purpose of the casing is only to guarantee further features of the battery, such as, for example, mechanical strength, rigidity and/or protection against external agents.

As is evident, in order to comply with the current regulations in force in terms of safety (such as, for example, the UN/ECE R100 standard), in addition to the plurality of cells positioned in such a way as to form a stack, a battery must comprise various elements, such as a casing and containment elements, thus being complex, expensive, difficult to assemble and/or disassemble.

The aim of this invention is to provide an improved battery which overcomes the above-mentioned drawbacks of the prior art.

In particular, the aim of this invention is to provide an improved battery which is simple and inexpensive.

A further aim of this invention is to provide an improved battery which is easy to assemble, whilst guaranteeing good characteristics of mechanical strength, rigidity and protection from outside agents.

Yet another aim of this invention is to provide an improved battery which is easy to disassemble, so as to make the operations for disposing of the battery easy at the end of its life.

Said aims are fully achieved by the improved battery according to the invention as characterised in the appended claims.

In particular, according to this invention, the battery may comprise a plurality of prismatic cells, or cells of other shapes, and a casing (4). The casing completely surrounds the stack, that is to say, the cells of the plurality of cells arranged according to a suitable orientation and side by side along a longitudinal axis, and it is configured for applying a preloading force on the stack. In this way, the casing acts both as a protective barrier with respect to the external forces and agents and as a containment element, since it limits the deformation of the stack inside it. The battery may therefore not comprise "ad hoc" containment elements, typical of the prior art, that is to say, containment elements different from the casing, thereby being simpler, more economical, easier to assemble and easier to disassemble.

Moreover, taking, for example, a battery comprising a plurality of prismatic cells positioned in such a way as to form a stack having a prismatic shape, therefore a stack having an elongate shape along a longitudinal axis, again according to the invention, the casing can apply one or more preloading forces on the stack. For example, the casing may apply a longitudinal preloading force which acts on the stack along the longitudinal axis, for compressing the cells longitudinally.

The term longitudinal axis is used to mean any axis parallel to the longitudinal axis.

Again, the casing may apply, for example, a first transversal preloading force, which acts along a second axis transversal to the first longitudinal axis, to compress the cells transversely.

Again, the casing may apply, for example, a second transversal preloading force, which acts along a second axis transversal to the first longitudinal axis and perpendicular to the first transversal axis, to always compress the cells transversely.

The casing can, therefore, apply a longitudinal preloading force and/or a first transversal preloading force and/or a second transversal preloading force.

The points of application of these preloading forces, which may be one or more, correspond, in particular, to the points of contact between the casing and the stack. These points of contact may be precise or distributed, that is to say, they may affect portions of more or less large surfaces. For this reason, whilst always referring to individual forces applied along axes, in particular the longitudinal axis, and one or more axes perpendicular to it, it should be noted that the casing can apply actual pressures on the surfaces of the stack, always remaining within the scope of protection defined by the accompanying claims.

Moreover, again according to the invention, the casing can have different parts, for example a shell, a first flange and a second flange. These parts may be coupled to each other, for example by gluing, that is, chemical soldering. In this way it is possible to guarantee a good degree of insulation from the outside environment, even in the absence of seals, since the glue may create a continuous and impermeable seal between the various elements. In this way the battery is easy to assemble, whilst guaranteeing good characteristics of mechanical strength, rigidity and protection from external agents.

Moreover, the glue may have a threshold temperature, that is to say, a temperature beyond which the glue loses, partly or totally, its adhesive power. In this way, the gluing operation may be reversible, that is to say, the battery 1 may be disassembled simply and without having to damage the battery 1. In this way, the battery according to this invention is easy to disassemble, so as to make the operations for disposing of the battery easy at the end of its life.

However, whilst always referring to the coupling by gluing, it must be noted how the various parts of the casing can also be coupled by means of other coupling methods, for example by means of rivets, bolts, joints, or other mechanical couplings which are reversible and not reversible.

This and other features will become more apparent from the following description of a preferred embodiment of the invention, illustrated by way of non-limiting example in the accompanying tables of drawings, in which:
- Figure 1 is a perspective view of an improved battery according to this invention;
- Figure 2 shows a perspective view of a first detail of the improved battery according to the invention;
- Figure 3 shows an exploded front view of a second detail of the improved battery according to this invention, according to a first embodiment;
- Figure 4 shows a perspective view of the second detail of the improved battery according to the invention, according to the first embodiment;
- Figure 5 shows an exploded perspective view of the second detail of the improved battery according to this invention, according to a second embodiment;
- Figure 6 shows a perspective view of a third detail of the improved battery according to the invention;
- Figure 7 shows a perspective view of a fourth detail of the improved battery according to the invention;
- Figure 8 shows a perspective view of a fifth detail of the improved battery according to the invention;
- Figure 9 shows a perspective view of a template and some parts of the improved battery during a first step of the method for assembling the improved battery;
- Figure 10 shows a perspective view of the template and some parts of the improved battery during a second step of the method for assembling the improved battery;
- Figure 11 shows a perspective view of the template and some parts of the improved battery during a third step of the method for assembling the improved battery;
- Figure 12 shows a perspective view of the template and some parts of the improved battery during a fourth step of the method for assembling the improved battery;
- Figure 13 shows a perspective view of the template and some parts of the improved battery during a fifth step of the method for assembling the improved battery;
- Figure 14 shows a perspective view of the template and some parts of the improved battery during a sixth step of the method for assembling the improved battery;
- Figure 15 is a perspective view of a battery made by connecting together several improved batteries according to the invention;
- Figure 16 illustrates a further perspective view of a battery made by connecting together several improved batteries according to the invention;
- Figure 17 shows a flow diagram of the method for assembling an improved battery according to the invention.

Identical reference numerals will be used in the drawings for similar elements.

Moreover, the directional terminology, such as "right", "left", "front", "rear", "base", "top", "upper", "lower", "side", etc., is used below with reference to the accompanying drawings. Since components and/or elements and/or embodiments of this invention may be positioned and/or made to operate in various different orientations, the directional terminology is used purely by way of a non-limiting example.

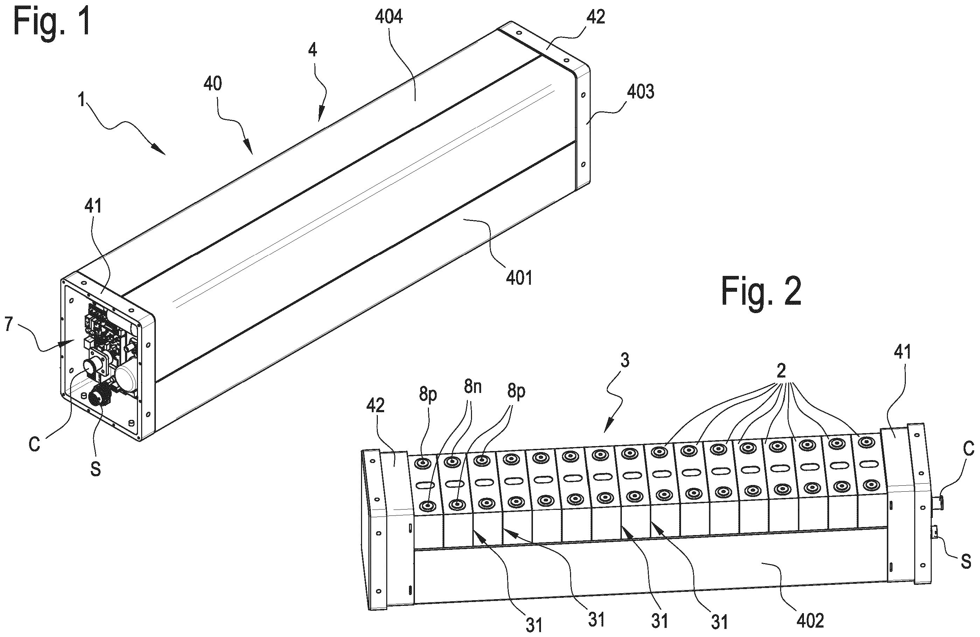

With reference to Figure 1, the battery 1 has the shape of a parallelepiped, characterised by a longitudinal axis and two transversal axes. For this reason, the battery 1 has two transversal faces, that is to say, the faces parallel to each other and at right angles to the longitudinal axis of the parallelepiped, and four lateral faces, that is to say, the faces parallel to the longitudinal axis of the parallelepiped. However, it is evident that the battery could have other shapes, without thereby departing from the scope of protection as defined by the appended claims. The faces of the battery 1 define an outer surface of the battery 1.

Again according to Figure 1, the battery 1 comprises a casing 4.

Figure 2 shows a first detail of the battery 1, wherein a portion of the casing 4 has been made invisible, in such a way as to describe the inside of the casing 4. The battery 1 comprises a plurality of cells 2. The cells of the plurality of cells 2 have a prismatic shape and are positioned, inside the casing 4, according to a same orientation and adjacent to each other, in such a way as to form a stack 3. The stack 3, like the battery 1, also has the shape of a parallelepiped, or prismatic, characterised by a longitudinal axis and two transversal axes, coinciding with those of the battery 1. For this reason, the stack 3 also has two transversal faces, that is to say, the faces parallel to each other and at right angles to the longitudinal axis of the parallelepiped, and four lateral faces, that is to say, the faces parallel to the longitudinal axis of the parallelepiped. The faces of the stack 3 define an outer surface of the stack 3.

The battery 1 may comprise at least one or more elastic pads 31. The elastic pads 31 may be positioned, for example, between the casing 4 and the stack 3, and/or between at least two cells of the plurality of cells 2. The elastic pads 31 have the purpose of introducing an elastic element, i.e. an elastic component, inside the battery 1 and, in particular, between the parts (e.g.: casing 4, stack 3, plurality of cells 2) which make it up.

Each cell of the plurality of cells 2 has a positive electrode 8p and a negative electrode 8n. When forming the stack 3, the cells of the plurality of cells 2 are positioned and oriented in such a way that, in one line, the positive electrodes 8p are alternated with the negative electrodes 8n, as for example illustrated in Figure 2. In this way it is easier to connect the cells "in series" so as to form a stack 3. The term "series" connection means when two or more components are connected in such a way as to be crossed by an electric current of equal intensity. In particular, two or more cells are connected in series when the negative electrode 8n of a cell is connected to the positive electrode 8p of the next cell, and so on for the successive cells.

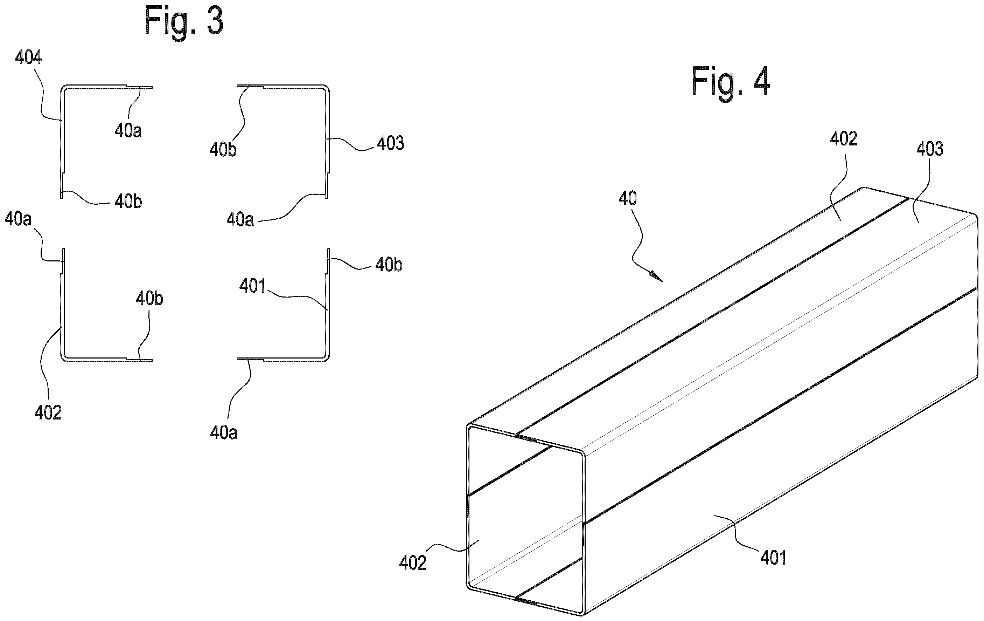

The casing 4 comprises a shell 40, a first flange 41 and a second flange 42. The first flange 41 is located at a transversal face of the stack 3. The second flange 42 is positioned parallel to the first flange 41, at the transversal face of the stack 3 opposite that of the first flange 41. The shell 40 is positioned between the first flange 41 and the second flange 42. With reference in particular to Figures 3 and 4, the shell 4 has a box shape, that is to say, it is shaped like a tubular element with a square cross section, the faces of which are positioned at the lateral faces of the stack 3. As already mentioned, the stack 3 could have other shapes, from which other shapes would derive for the shell 40, the first flange 41 and the second flange 42, without thereby departing from the scope of protection as defined by the appended claims.

With reference to Figures 1 and 2 it is evident how the casing 4 is positioned in such a way as to completely surround the plurality of cells 2. The expression "completely surrounding" means completely covering the external surface of the stack 3. In particular, the shell 40, the first flange 41 and the second flange 42 are coupled to each other and positioned in such a way as to guarantee that the plurality of cells 2 is completely surrounded by the casing 4. In this way, the casing 4 represents a protection for the plurality of cells 2 contained inside it, in particular with respect to any external forces and/or agents, "substantially isolating" the stack 3 from the outside environment. The expression "substantially isolating" is used to mean that there may be openings in the casing, such as, for example, slots. However, these openings are sufficiently small, or reduced, in such a way as not to affect the degree of insulation from outside agents, desired for the battery 1.

The coupling may be accomplished by gluing, that is to say, chemical soldering. In this way it is possible to guarantee a good degree of insulation from the outside environment, even in the absence of seals, since the glue may create a continuous and impermeable seal between the various elements.

Moreover, the glue may have a threshold temperature, that is to say, a temperature beyond which the glue loses, partly or totally, its adhesive power. In this way, the gluing operation may be reversible, that is to say, the battery 1 may be disassembled simply and without having to damage the battery 1. The battery 1 according to this invention may be made using different glues, such as, for example, epoxy, acrylic, methacrylic, cyanoacrylate or polyester. These glues may be characterised, for example, by threshold temperatures equal to or greater than 60°C, preferably equal to or greater than 80°C.

The casing may be made of various materials in order to improve, for example, the characteristics of mechanical strength, heat dissipation, electrical insulation and/or resistance to external agents, such as, for example, dust, water and/or air. Further, the casing may be made of a deformable material, that is to say, having a desired elastic component, useful for applying preloading forces on the stack by means of the casing. In particular, the casing 4 may be made, or more generically it may comprise, for example, aluminium, steel or composite material.

Once the battery 1 has been assembled, in particular by gluing, the casing 4 exerts a preloading force on the stack 3, in such a way as to limit the deformation of the stack 3 inside the casing 4.

The preloading force may be generated using the elasticity of the casing 4, that is to say, the elasticity of the parts which make up the casing 4 and/or the elasticity of the cells 2 which make up the stack 3 and/or the elasticity of the elastic pads 31.

In particular, the preloading force may comprise a longitudinal preloading force acting on said stack 3 along a longitudinal axis, a first transversal preloading force acting along a first transversal axis of the battery 1, perpendicular to the longitudinal axis, and/or a second transversal preloading force acting along a second transversal axis of the battery 1, perpendicular to the longitudinal axis and to the first transversal axis. With reference to Figures 1 and 2, the first flange 41 and the second flange 42 apply the longitudinal preloading force along the longitudinal axis of the battery 1, whilst the shell 40 applies the first transversal preloading force on the stack 3 along the first transversal axis of the battery 1, and/or the second transversal preloading force on the stack 3 along the second transversal axis of the battery 1. In this way, the casing also acts as a containment element, because by applying at least one preloading force on the stack 3 it limits the deformation inside the casing 4.

Figure 3 shows a second detail of the battery 1 according to a first embodiment, wherein the shell 40 comprises four shell portions 401, 402, 403, 404. Each shell portion 401, 402, 403, 404 of the shell 40 substantially has an L-shaped profile. Again, each shell portion 401, 402, 403, 404 of the shell 40 comprises, in turn, a first flap 40a and a second flap 40b (jointly called "the flaps 40a, 40b"), which extend parallel to the longitudinal axis of the battery 1. The flaps 40a, 40b represent the coupling zones between the shell portions 401, 402, 403, 404. In particular, the flaps 40a, 40b may comprise, for example, tapering of the thickness of the shell portion 401, 402, 403, 404, in such a way as to be superposable with other flaps 40a, 40b of other shell portions 401, 402, 403, 404. In this way it is possible to obtain an optimum contact zone, to favour and improve the coupling between the shell portions 401, 402, 403, 404, as shown in Figure 4.

As described above, the gluing method can also be used for the coupling between the four shell portions 401, 402, 403, 404, in particular by placing the glue at the flaps 40a, 40b. In this way, all the above-mentioned advantages are obtained.

The presence of four shell portions 401, 402, 403, 404 makes the operations for assembling and disassembling the battery 1 simple, such as, for example, the operation for inserting the plurality of cells 2 inside the casing 4, and can improve the containment of the plurality of cells 2 inside the casing.

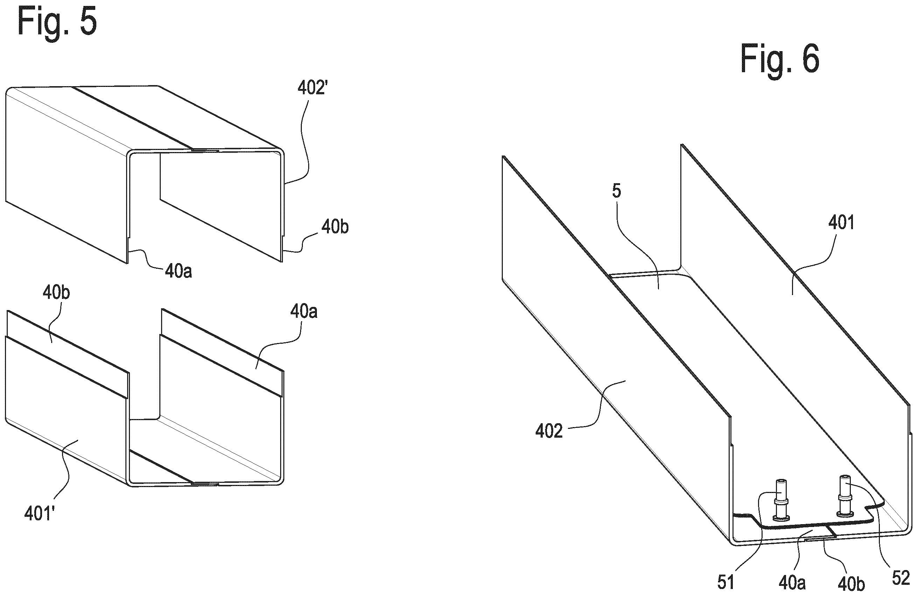

Moreover, while the first flange 41 and the second flange 42 apply the longitudinal preloading force along the longitudinal axis of the battery 1, the four shell portions 401, 402, 403, 404 apply the first transversal preloading force on the stack 3 along the first transversal axis of the battery 1, and/or the second transversal preloading force on the stack 3 along the second transversal axis of the battery 1. In this way, the casing also acts as a containment element, because by applying at least one preloading force on the stack 3 it limits the deformation inside the casing 4. Figure 5 shows, on the other hand, the second detail of the battery 1 according to a second embodiment, wherein the shell 40 comprises two shell portions 401', 402'. In this case, each shell portion 401', 402' of the shell 40 substantially has a C-shaped profile. As in the previous case, the two shell portions 401', 402' each comprise a first flap 40a and a second flap 40b, which extend parallel to the longitudinal axis of the battery 1, and which may have the same features already described in the previous embodiment.

As described above, the gluing method may also be used for the coupling between the two shell portions 401', 402', in particular by placing the glue at the flaps 40a, 40b. In this way, all the above-mentioned advantages are obtained.

The presence of two shell portions 401', 402' makes the operations for assembling and disassembling the battery 1 simple, such as, for example, the operation for inserting the plurality of cells 2 inside the casing 4, and can improve the protection of the plurality of cells 2 relative to any forces or external agents.

Moreover, as in the previous case, whilst the first flange 41 and the second flange 42 apply the longitudinal preloading force along the longitudinal axis of the battery 1, the two shell portions 401', 402' apply the first transversal preloading force on the stack 3 along the first transversal axis of the battery 1, and/or the second transversal preloading force on the stack 3 along the second transversal axis of the battery 1.

In this way, the casing also acts as a containment element, because by applying at least one preloading force on the stack 3 it limits the deformation inside the casing 4.

According to a third embodiment of the battery 1 (not shown in the drawing), the shell is made by a single element having a longitudinal opening parallel to the longitudinal axis of the battery 1. The two flaps of the longitudinal opening coincide, respectively, with the first tab 40a and the second tab 40b. The flaps 40a, 40b may have the same features described in the two previous embodiments.

As described above, the gluing method may also be used for the coupling, that is, the closing, of the longitudinal opening, in particular by placing the glue at the flaps 40a, 40b. In this way, all the above-mentioned advantages are obtained.

The presence of the longitudinal opening makes the operations for assembling and disassembling the battery 1 simple, such as, for example, the operation for inserting the plurality of cells 2 inside the casing 4, and can improve the protection of the plurality of cells 2 relative to any forces or external agents.

Moreover, whilst the first flange 41 and the second flange 42 apply the longitudinal preloading force along the longitudinal axis of the battery 1, the elasticity of the walls of the shell 40 can be used, and/or the elasticity of the cells 2 which make up the stack 3, and/or the elasticity of the elastic pads 31, to apply the first transversal preloading force on the stack 3 along the first transversal axis of the battery 1, and/or the second transversal preloading force on the stack 3 along the second transversal axis of the battery 1.

In this way, the casing also acts as a containment element, because by applying at least one preloading force on the stack 3 (in combination with the elastic component of the casing 4 and/or the cells 2 and/or the elastic pads 31), it limits the deformation inside the casing 4.

As shown in Figure 6, a heat exchanger 5 may be positioned between the stack 3 and the shell 40. In particular, the heat exchanger 5 may have the shape of a plate and be positioned at a lateral face of the shell 40 in such a way as to be in thermal contact with a corresponding lateral face of the stack 3. In order to improve the thermal contact between the heat exchanger 5 and the stack 3, a layer of material characterised by a high thermal conductivity coefficient can be inserted between them, for example a polymer mixed with metallic particles. Moreover, it may be useful to choose a silicone which also has a very low electrical conductivity. This guarantees excellent heat exchange between the heat exchanger 5 and the stack 3, while guaranteeing electrical insulation.

The exchanger 5 may be, for example, a metal plate, a Peltier plate or an air or water exchanger, wherein air or water is circulated inside it, or, more generally, a cooling fluid. For this reason, as shown in Figure 6, the exchanger 5 may have a first pin 51 and a second pin 52. The purpose of the first and the second pins 51, 52 is to connect the exchanger 5 to an external circuit (not shown in the drawing), for example, positioned at the first flange 41 and/or the second flange 42. In the case of the Peltier plate, the external circuit will be of the electrical type and the first and the second pins 51, 52 will have the purpose of electrically connecting the Peltier plate to the circuit. In the case of an air or water exchanger, the first and the second pins 51, 52 will have the purpose of putting the exchanger 5 in fluid-dynamic communication with an external cooling circuit.

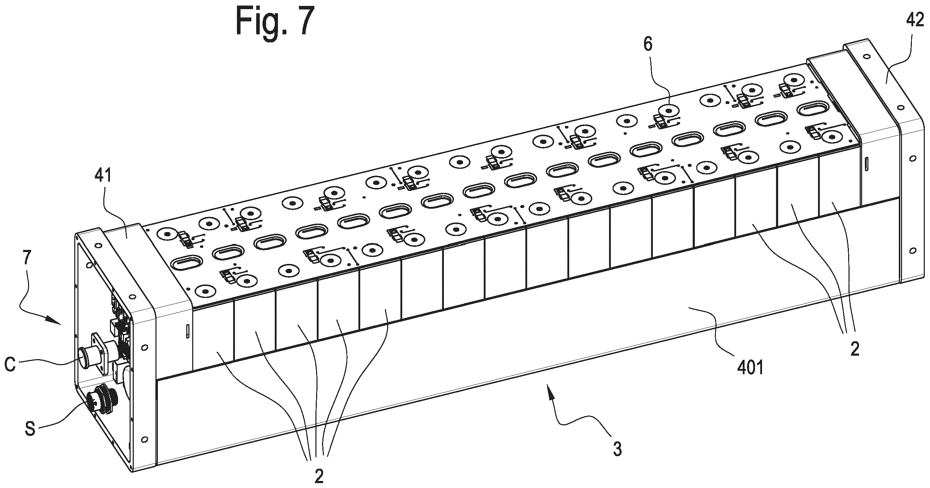

Figure 7 shows a fourth detail of the battery 1 according to the invention, in which it is possible to see an electrical connection mask 6 positioned between the stack 3 and the shell 40. In particular, the electrical connection mask 6 may have the shape of a plate, or a pad made, for example, of PET. Moreover, the electrical connection mask 6 may be positioned at a lateral face of the shell 40, so as to be in electrical contact with a corresponding lateral face of the stack 3, in particular the face having the positive electrodes 8p and the negative electrodes 8n of the plurality of cells 2. The electrical connection mask 6, which is also called Isolated Bus Bar (IBB) in the reference technical sector, has electrically conductive parts and electrically insulating parts, in such a way that, when it is in electrical contact with the positive electrodes 8p and the negative electrodes 8n of the plurality of cells 2, the electrical connection mask 6 electrically connects in series the cells of the plurality of cells 2, in such a way as to form a stack 3 characterised by a positive pole and a negative pole.

The battery 1 may comprise a power connector C, so as to be able to connect any electrical load to the positive pole and the negative pole of the stack 3, that is to say, it may comprise two power connectors C, one for the positive pole and one for the negative pole. The power connectors C can be positioned at the first flange 41 and/or the second flange 42. For example, a power connector C, relative to the positive pole of the stack 3, may be positioned at the first flange 41, and a power connector C, relative to the negative pole of the stack 3, may be positioned at the second flange 42.

In order to make a secure and permanent electrical contact, the electrically conductive parts of the electrical connection plate 6 are welded, for example by laser soldering, or screwed, respectively with the positive electrodes 8p and with the negative electrodes 8n of the cells of the plurality of cells 2. Moreover, the electrical connection mask 6 may comprise one or more sensors, such as, for example, temperature sensors, voltage sensors and current sensors. In this case, the electrical connection mask 6 also comprises all the signal connections as well as the power connections.

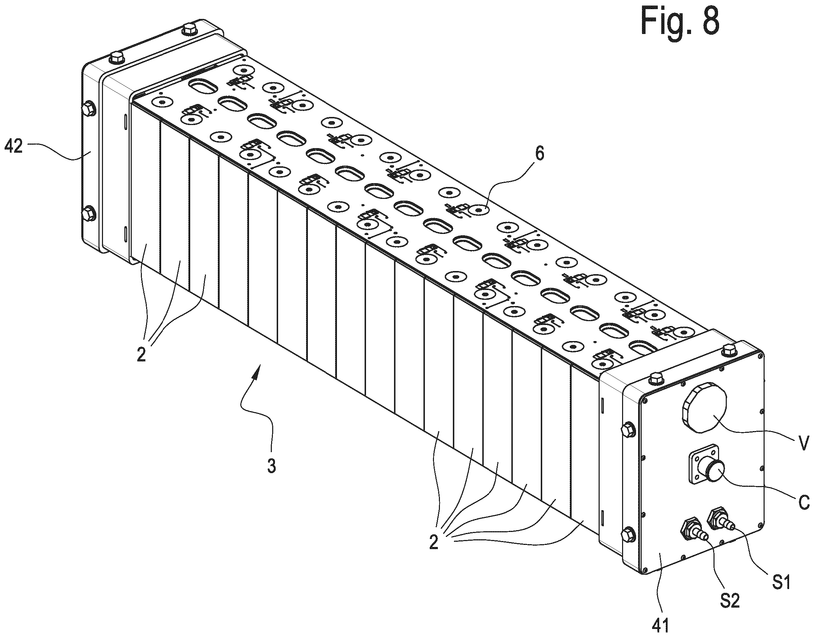

The positive pole and the negative pole of the battery 1 may be connected to an electronic control circuit 7, as shown in Figures 7 and 8. The purpose of the electronic control circuit 7 is to manage and control the battery 1, for example controlling the currents and the recharging cycles, limiting and adjusting the currents supplied by the battery 1 during use, detecting any faults of the battery 1, sending data relative to the use of the battery 1 to an external processor, and/or storing it in a memory present inside it.

The electronic control circuit 7 may be positioned at the first flange 41 and/or the second flange 42, in particular inside a recess, or compartment, which may then be sealed by a closing cover (not shown in the drawing).

The signals of the sensors and/or other signals generated inside the battery 1, for example by the electronic control circuit 7, may be made available outside the battery 1 by means of a signals connector S positioned at the first flange 41 and/or the second flange 42. The signals connector S and the power connectors C can, for example, also be combined in a single connector comprising both the signal part and the power part.

On the first flange 41 or on the second flange 42 there may be a safety valve V for discharging the gases produced by the cells of the plurality of cells 2 in the event of a fault of the cells.

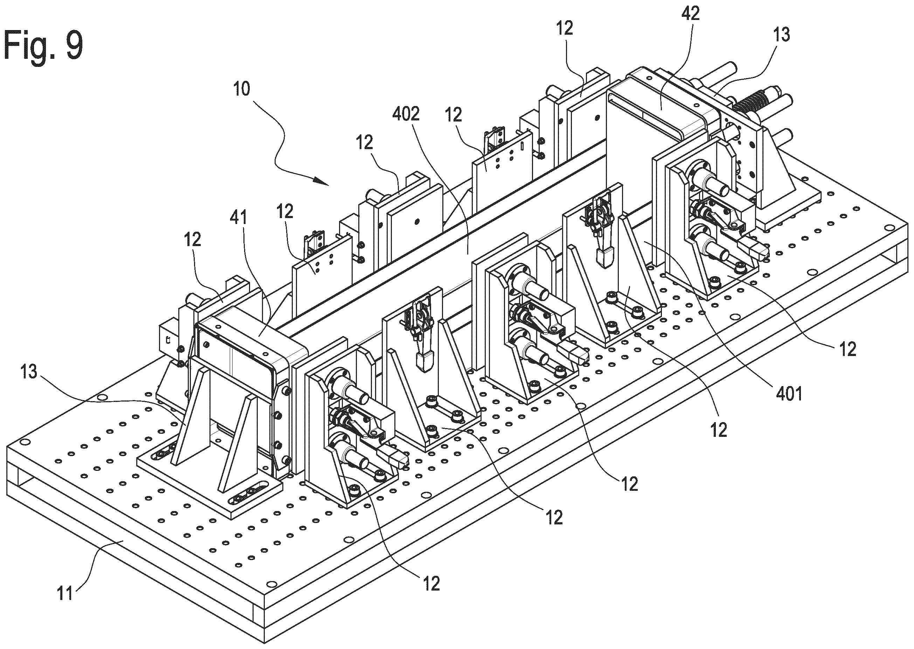

Figure 9 shows a template 10 for implementing the method for assembling the battery 1, according to the invention. The template has a base 11, which may be made of metal, for example steel, and may have holes, in particular a matrix of holes, more specifically threaded holes, so as to facilitate the coupling of further components on it.

The template 10 also has one or more longitudinal clamps 13, and one or more transversal clamps 12 (together referred to as "the clamps 12, 13"). The clamps 12, 13 may be coupled to said base 11 through said holes. The clamps 12, 13 may be positioned on said base 11 in different positions, using the large number of holes present on the base 11. In this way it is possible to modify and adapt the template 10 to different dimensions of the battery 1 to be assembled.

The term longitudinal clamp 13 identifies the clamp which, during use, acts along the longitudinal axis of the battery 1, whilst the term transversal clamp 12 identifies the clamp which, during use, acts along one of the transversal axes of the battery 1.

With reference to Figure 9, the template comprises a longitudinal clamp 13 and a plurality of transversal clamps 12. Some transversal clamps 12 act along a first transversal axis, which could be identified, with reference to Figure 9, as horizontal (horizontal axis), whilst other transversal clamps 12 act along a second transversal axis, perpendicular to the first transversal axis, which could be identified, again with reference to Figure 9, as vertical (vertical axis).

As is known, the clamps have two jaws, the aim of which is to constrain, on opposite faces, an object, and an actuator, for moving one jaw relative to the other, so as to clamp the object, applying a force on it. As shown in Figure 9, the template 10 comprises a longitudinal clamp 13 and a plurality of transversal clamps 12, all calibrated. In particular, the longitudinal clamp comprises a screw which can be operated by a torque wrench, in such a way as to measure the force applied to the object constrained between its jaws, and thus apply a desired and predetermined force. On the other hand, the transversal clamps 12 each comprise a calibrated toggle, in such a way as to apply a desired and predetermined force on the constrained object.

It is evident how the template 10, according to the invention, could comprise some clamps which are calibrated and others which are not calibrated, without thereby departing from the scope of protection as defined by the appended claims.

The performance of the method, according to the invention, is carried out as follows.

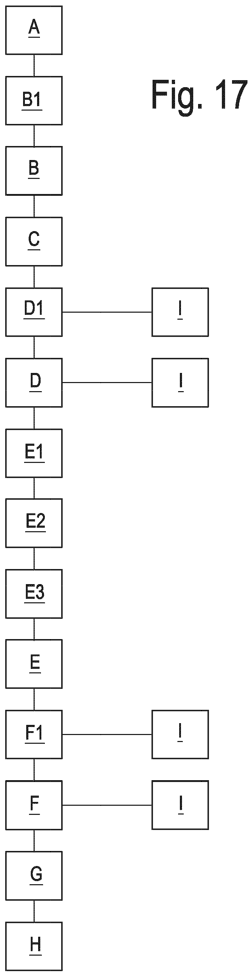

With reference to Figure 9, the first step of the method comprises placing inside the template 10 a first shell portion 401, 402; 401'. This step is labelled A in Figure 17. In particular, the first shell portion 401, 402; 401' is positioned on the base 11 of the template 10, inside the transversal clamps 12 and the longitudinal clamp 13.

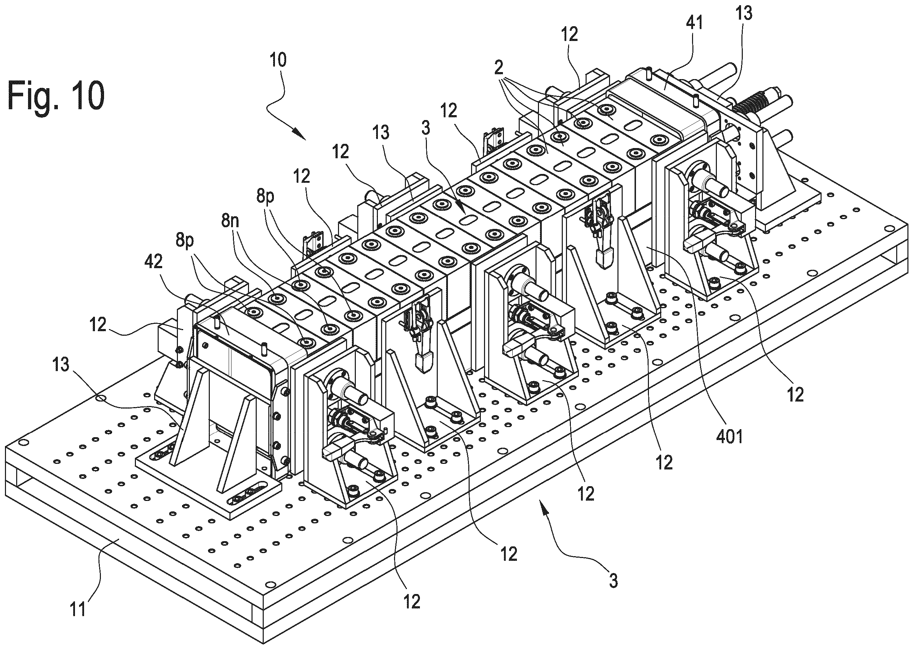

With reference to Figure 10, the cells of the plurality of cells 2, suitably oriented and adjacent to each other, are positioned on the first shell portion 401, 402; 401', in such a way as to form a stack 3. In this way, the first shell portion 401, 402; 401' is brought into contact with a first lateral face of the stack 3. This step is labelled B in Figure 17.

The method according to the invention may comprise a further step, for example, between the steps A and B. This further step, labelled B1 in Figure 17, comprises positioning a heat exchanger 5 between the casing 4 and the stack 3, in particular between the first shell portion 401, 402; 401' and the first lateral face of the stack 3, in such a way that the heat exchanger 5 is in thermal contact with the stack 3.

The step of bringing the first flange 41 and the second flange 42 into contact with a respective transversal face of the stack 3 is labelled C.

The longitudinal clamp 13 then applies the longitudinal preloading force on the transversal faces of the stack 3. In effect, the longitudinal clamp 13, acting on the first flange 41 and on the second flange 42, compresses the stack 3, in such a way as to limit the deformation of the stack 3 inside the casing 4, along the longitudinal axis. This step is labelled D in Figure 17.

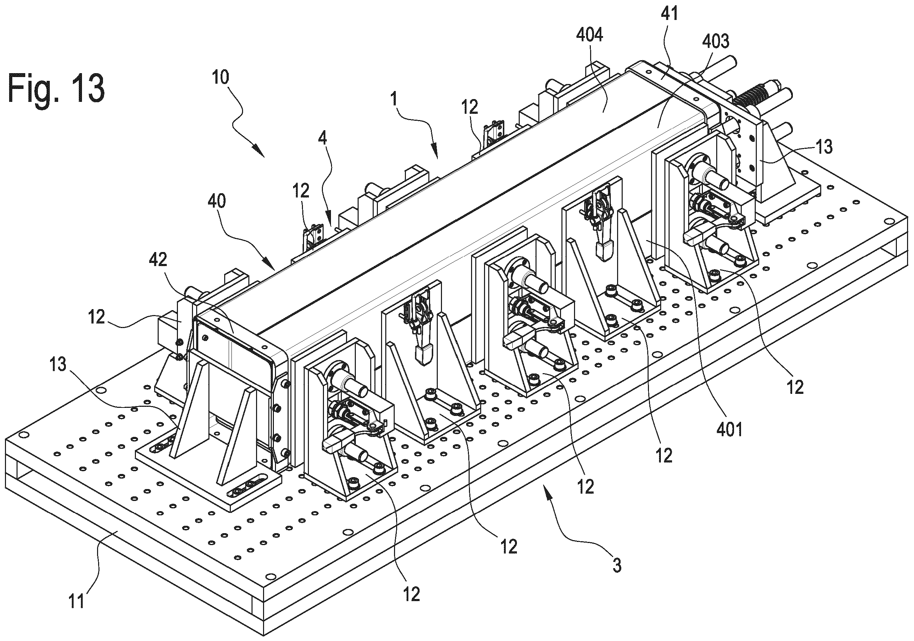

The reference label E identifies the step of bringing into contact a second shell portion 403, 404; 402' with a second lateral face of the stack 3, opposite the first lateral face of the stack 3, as shown purely by way of example in Figure 13.

The method according to the invention may comprise further steps, for example, between the steps D and E. These further steps are labelled E1, E2 and E3 in Figure 17.

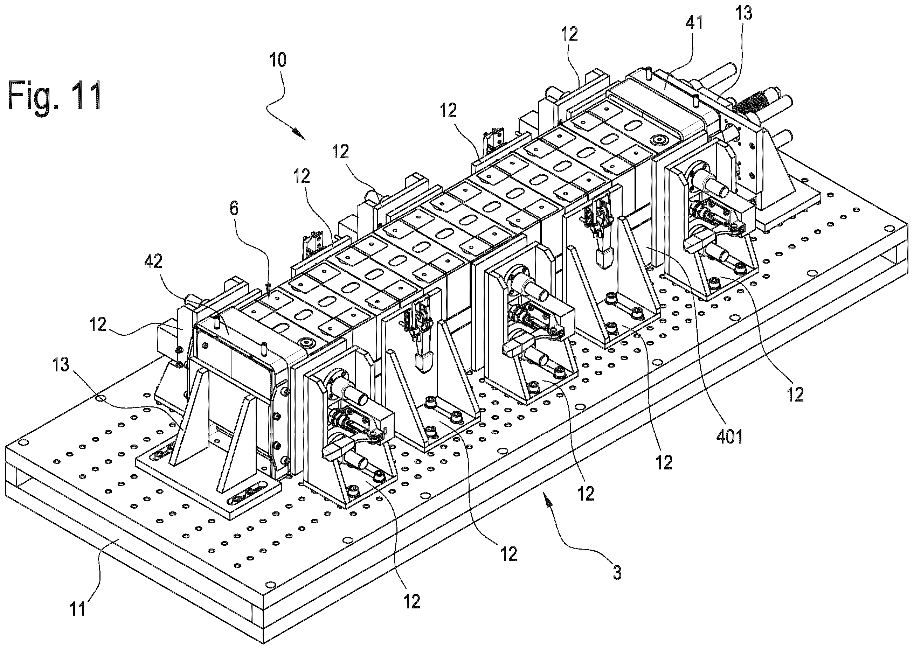

In particular, step E1 comprises positioning an electrical connection plate 6 between the second shell portion 403, 404; 402' and the second lateral face of said stack 3, in such a way that the electrical connection plate 6 is in electrical contact with the stack 3. In other words, with reference to Figure 11, before positioning the second shell portion 403, 404; 402' on the second lateral face of the stack 3, the electrical connection plate 6 is positioned on the stack 3.

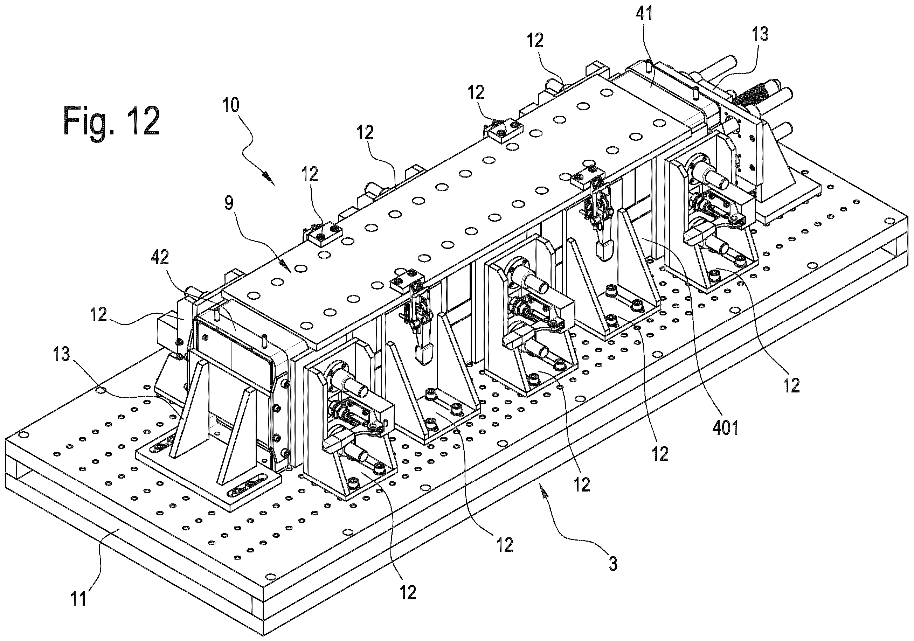

Then, step E2 comprises soldering the electrical connection plate 6, in particular by laser soldering, to the positive electrodes 8p and the negative electrodes 8n of the plurality of cells 2, in such a way as to form, respectively, a positive pole and a negative pole. The soldering may be made with the help of a soldering mask 9, as shown in Figure 12.

Step E3 comprises, on the other hand, checking, that is to say, measuring, a parameter relative to the correct operation of the battery 1, that is to say, performing tests, in order to check that the battery 1 is perfectly operational, before sealing the stack 3, and all the other components of the battery 1, inside the casing 4.

In general, the steps which do not comprise the use of one or more clamps 12; 13 for applying a preloading force could also be performed outside the template, momentarily carrying the various parts during assembly into other assembly zones. For example, the steps E1, E2 and/or E3 might be performed outside the template. In this case, temporary containment means may be used to keep active the preloading forces already applied to the stack 3. For example, after the step D, straps might be applied between the first flange 41 and the second flange 42 in such a way as to keep the longitudinal preloading active also outside the template 10, so as to be able to temporarily move the stack 3, the first flange 41 and the second flange 42 outside the template 10, for example, to perform the steps E1, E2 and/or E3. In this case, with reference to Figure 8, the first flange 41 and the second flange 42 could have slots in order to fix, if necessary, straps (not shown in the drawing). Once the various parts during assembly are repositioned inside the template 10, the straps, that is to say, the temporary containment means, may be eliminated or they may be left coupled, for example, to the first flange 41 and to the second flange 42. If they are left, the temporary containment means (that is to say, the straps) are to be considered included in the casing 4.

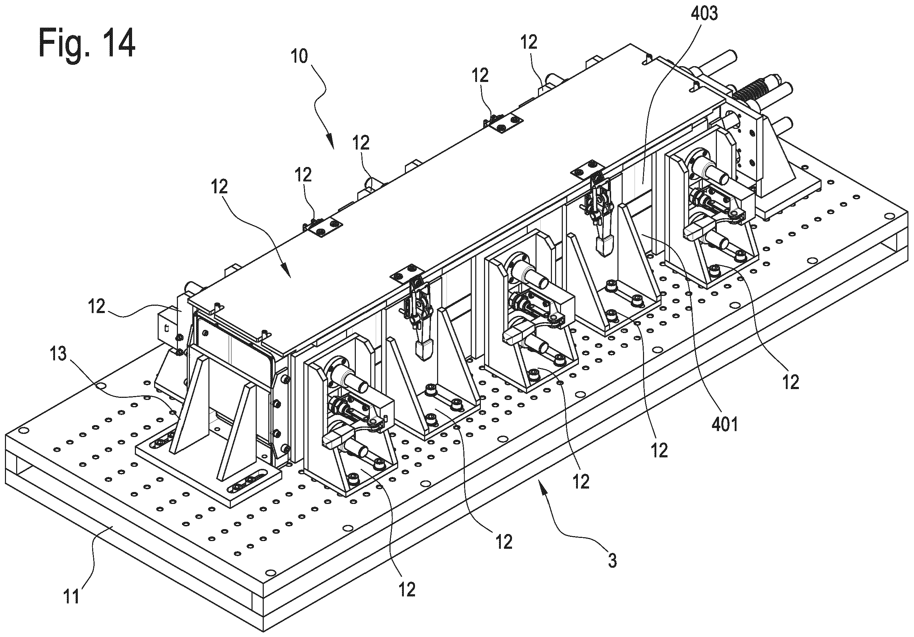

As shown in Figure 14, by using one or more transversal clamps 12, in particular using one or more transversal clamps 12 acting along the vertical axis, the first transversal preloading force is applied on said first lateral face and said second lateral face of the stack 3. In effect, the transversal clamp 12, acting on the first shell portion 401, 402; 401' and on the second shell portion 403, 404; 402', compresses the stack 3, in such a way as to limit the deformation of the stack 3 inside said casing 4, along the first transversal axis. This step is labelled F in Figure 17.

If an improved battery 1 must be assembled wherein the shell 40 comprising four shell portions 401, 402, 403, 404, the method according to the invention comprises, during step A, placing inside the template 10 two first shell portions 401, 402. According to this embodiment, step B comprises bringing into contact the two first shell portions 401, 402 with the first lateral face, a third lateral face and a fourth lateral face, at right angles to said first lateral face, of the stack 3. In this case, step E comprises bringing into contact two second shell portions 403, 404 with the second lateral face, the third lateral face and the fourth lateral face of said stack 3.

By means of the four shell portions 401, 402, 403, 404, it is possible to apply the second transversal preloading force, in particular along the horizontal axis, on the third lateral face and on the fourth lateral face of the stack 3, by means of the two first shell portions 401, 402. This step is labelled D1 in Figure 17. Moreover, similarly, it is possible to apply the second transversal preloading force, in particular along the horizontal axis, on the third lateral face and on the fourth lateral face of the stack 3, by means of the two second shell portions 403, 404. This step is labelled F1 in Figure 17.

The method according to the invention may comprise, at the steps D1, D, F1 and F, which comprise the application of a preloading force, the step of measuring the longitudinal preloading force, the first transversal preloading force, and/or the second transversal preloading force, applied to the stack 3. This step is labelled I in Figure 17. In particular, whenever a preloading force is applied to the stack 3 by means of one of the clamps 12, 13 of the template 10, a force sensor, in particular a load cell, may be used for measuring the preloading force applied by the clamps 12, 13. According to a preferred embodiment, the template 10 comprises these force sensors. In this way it is possible to control and check that the stack 3 is subjected to predetermined preloading forces sufficient to limit the deformation inside said casing 4, guaranteeing the correctness and the quality of the operations for assembling the battery 1.

Once the first flange 41, the second flange 42 and all the portions of shell 401, 402, 403, 404; 401', 402' are in position, that is to say, are in contact with the stack 3, and the preloading forces act on the stack 3 under the action of the clamps 12, 13 of the template 10, it is possible to couple, in particular by gluing, all the portions of shell 401, 402, 403, 404, 401', 402' to each other, at the first flaps 40a and the second flaps 40b. This step is labelled G in Figure 17.

Moreover, at the same time or in a moment after the step G, the method according to the invention comprises coupling, in particular by gluing, the shell portions 401, 402, 403, 404; 401', 402' with the first flange 41 and the second flange 42.

The gluing operations described here may be performed at different times with respect to that described, in order to improve and speed up the method for assembling the battery 1, without thereby departing from the scope of protection as defined in the appended claims.

At the end of the steps G and H, the casing 4 will completely surround the stack 3 and apply a preloading force along the longitudinal axis, and/or along the first transversal axis, and/or along the second transversal axis of the stack 3. In this way, the casing acts as a containment element, limiting the deformation of the stack 3 inside the casing 4, and as a protection against external forces and agents.

The battery 1 according to the invention may be connected electrically, for example in series or in parallel, to other batteries 1 of the same type, in a modular fashion, in order to make batteries with suitable desired electrical characteristics (for example voltage or current).

Moreover, the battery 1 may be mechanically connected to other batteries 1 of the same type, so as to form modular matrix structures.

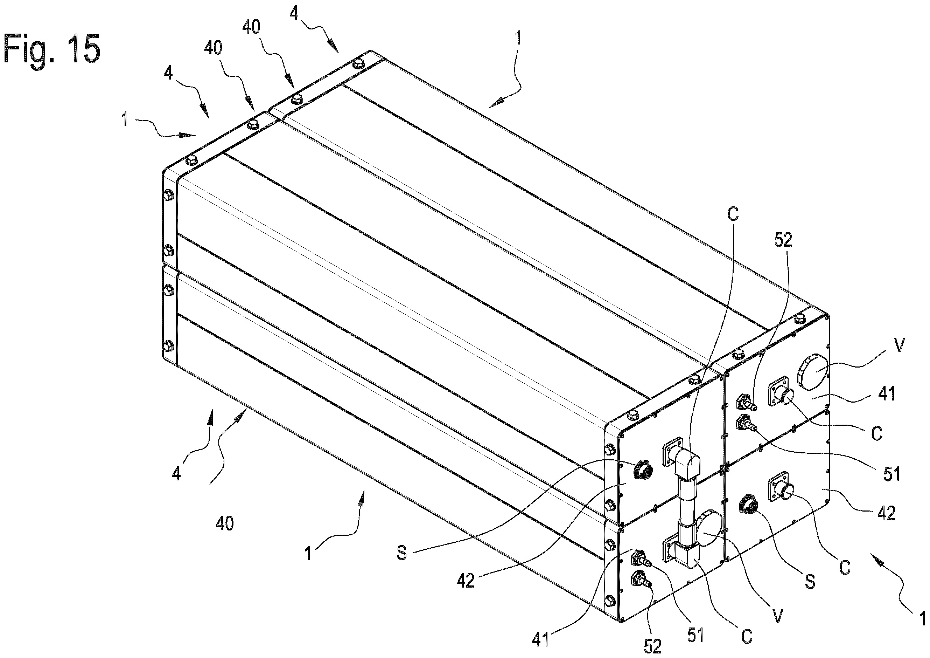

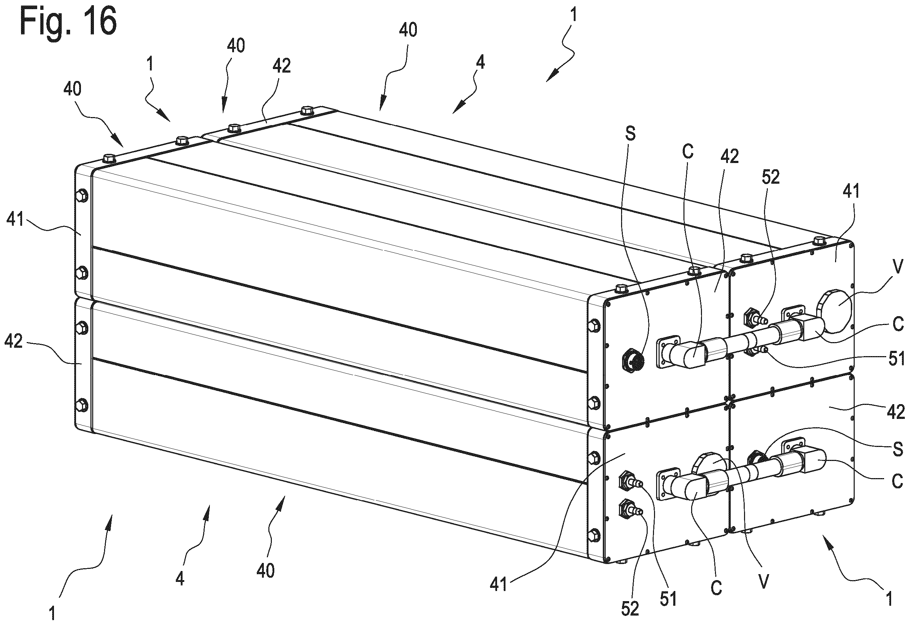

For example, as shown in Figures 15 and 16, a plurality of batteries 1 according to the invention, in particular four batteries 1, may be connected to each other mechanically in such a way as to form, for example, a 2 by 2 matrix. The mechanical coupling may occur, for example, by means of bolts and respective holes present in the first flange 41 and in the second flange 42 of each battery 1.

Again with reference to Figures 15 and 16, the plurality of batteries 1 can be connected in series to each other by portions of power cable. Each portion of power cable suitably connects a power connector S of a battery 1 to the power connector S, of the correct polarity, of a subsequent battery 1, so as to form the series. In this way, the plurality of batteries 1, interconnected in this way, would represent a single battery having two free power connectors S, with opposite polarity (one positive and the other negative), to which it is possible to connect any electrical load.

The preferred embodiments according to the invention are described above and variants of the invention have been suggested, but it shall be understood that experts in the field may make modifications and changes without thereby departing from the respective scope of protection as defined in the appended claims.

## Claims

1. A battery (1) comprising:
- a plurality of prismatic cells (2); and
- a casing (4),
wherein the cells of the plurality of cells (2) are positioned in such a way as to form a stack (3) having a prismatic shape, and wherein the casing (4) completely covers the stack (3) and is configured to apply a preloading force on the stack (3), so as to confine and clamp the stack (3) inside the casing (4) and limit a deformation of the stack (3) inside the casing (4).

2. The battery (1) according to claim 1, wherein the cells of the plurality of cells (2) are positioned side by side along a longitudinal axis, the stack (3) being elongate along the longitudinal axis, wherein the preloading force comprises a first transversal preloading force, which acts along a first axis transversal to the longitudinal axis, and a second transversal preloading force, which acts along a second transversal axis, perpendicular to the longitudinal axis and to the first transversal axis, to compress the cells transversally, or a longitudinal preloading force which acts on the stack (3) along the longitudinal axis, to compress the cells longitudinally.

3. The battery (1) according to claim 2 or 3, wherein said casing (4) comprises
- a shell (40);
- a first flange (41); and
- a second flange (42),
wherein the first flange (41) and the second flange (42) are positioned at respective transversal faces of the stack (3) and wherein the shell (40) is positioned around lateral faces of the stack (3), the first flange (41) and the second flange (42) being configured to apply the longitudinal preloading force on the stack (3), and/or the stack (40) being configured so as to apply the first transversal preloading force, and/or the second transversal preloading force, on the stack (3).

4. The battery (1) according to claim 3, wherein the shell (40) comprises a plurality of shell portions (401, 402, 403, 404; 401', 402'), and wherein each shell portion of the plurality of shell portions (401, 402, 403, 404; 401', 402') has an L-shaped or C-shaped profile in such a way as to cover at least two contiguous lateral faces of the stack (3).

5. The battery (1) according to claim 3 or 4, wherein the shell (40), the first flange (41) and the second flange (42) are coupled to each other, by gluing.

6. The battery (1) according to any one of claims 3 to 5, wherein the shell (40) comprises a first flap (40a) and a second flap (40b), parallel to the longitudinal axis of the stack (3) and coupled to each other by gluing.

7. The battery (1) according to claim 6, wherein the shell (40) comprises a plurality of shell portions (401, 402, 403, 404; 401', 402'), and wherein each shell portion of the plurality of shell portions (401, 402, 403, 404; 401', 402') comprises the first flap (40a) and the second flap (40b), and is coupled, by gluing, to other shell portions of the plurality of shell portions (401, 402, 403, 404; 401', 402'), at the first flap (40a) and the second flap (40b).

8. The battery (1) according to any one of claims 3 to 7, wherein the shell (40), the first flange (41) and the second flange (42) are coupled to each other by means of a glue, for example epoxy or polyester, having a threshold temperature beyond which said glue loses adhesive force, and wherein the threshold temperature is equal to or greater than 60°C.

9. The battery (1) according to any one of the previous claims, comprising a heat exchanger (5), positioned between the casing (4) and the stack (3), and in thermal contact with the stack (3), so as to exchange heat with the stack (3).

10. The battery (1) according to any one of the preceding claims, comprising at least one elastic pad 31 positioned between the casing (4) and the stack (3), or between two cells of the plurality of cells (2).

11. A method for assembling a battery (1), comprising the steps of:
- providing a plurality of prismatic cells (2) and a casing (4);
- positioning the cells of said plurality of cells (2) inside said casing (4), so as to form a stack (3) having a prismatic shape;
- completely covering the stack (3) by means of said casing (4); and
- applying a preloading force on the stack (3) by means of said casing (4), so as to limit a deformation of the stack (3) inside said casing (4).

12. The method according to claim 11, wherein the casing (4) comprises a lateral shell (40), a first flange (41) and a second flange (42), and wherein the shell (40) comprises a plurality of shell portions (401, 402, 403, 404; 401', 402'), the method comprising the steps of:
A. placing inside a template (10) a first shell portion (401, 402; 401') of the plurality of shell portions (401, 402, 403, 404; 401', 402');
B. positioning the cells of the plurality of cells (2) inside the template (10), bringing into contact the first shell portion (401, 402; 401') of the plurality of shell portions (401, 402, 403, 404; 401', 402') with a first lateral face of the stack (3);
C. bringing the first flange (41) and the second flange (42) into contact with respective transversal faces of the stack (3);
D. applying a longitudinal preloading force on the transversal faces of the stack (3) by means of the first flange (41) and the second flange (42),
E. bringing into contact a second shell portion (403, 404; 402') of the plurality of shell portions (401, 402, 403, 404; 401', 402') with a second lateral face of the stack (3), opposite the first lateral face;
F. applying a first transversal preloading force on said first lateral face and said second lateral face of the stack (3), by means of the first (401, 402; 401') and the second (403, 404; 402') shell portion of the plurality of shell portions (401, 402, 403, 404; 401', 402').

13. The method for assembling a battery (1) according to claim 12, wherein step A comprises placing inside said template (10) two first shell portions (401, 402) of the plurality of shell portions (401, 402, 403, 404; 401', 402'), wherein step B comprises bringing into contact the two first shell portions (401, 402) of the plurality of shell portions (401, 402, 403, 404; 401', 402') with the first lateral face, a third lateral face and a fourth lateral face, at right angles to said first lateral face, of the stack (3), wherein the step E comprises bringing into contact two second shell portions (403, 404) of the plurality of shell portions (401, 402, 403, 404; 401', 402') with the second lateral face, the third lateral face and the fourth lateral face of the stack (3), and wherein said method also comprises the steps of:
D1. applying a second transversal preloading force on the third lateral face and on the fourth lateral face of said stack (3), by means of the two first shell portions (401, 402) of the plurality of shell portions (401, 402, 403, 404; 401', 402'); and
F1. applying a third transversal preloading force on the third lateral face and on the fourth lateral face of said stack (3), by means of the two second shell portions (403, 404) of the plurality of shell portions (401, 402, 403, 404; 401 ', 402').

14. The method for assembling a battery (1) according to any one of claims 11 to 13, comprising the step of:
I. measuring the preloading force by means of a force sensor.

15. A template (10) for actuating a method, according to any one of claims 12 to 18, for assembling a battery (1) comprising a plurality of cells (2), and a casing (4), the cells of the plurality of cells (2) being positioned side by side along a longitudinal axis, in such a way as to form a stack (3) having a prismatic shape, the stack (3) being elongate along the longitudinal axis, and the casing (4) completely covering the stack (3), wherein the template (10) comprises
- a base (11) for supporting, when in use, said battery (1);
- a transversal clamp (12) for applying, when in use, a transversal preloading force on said stack (3) by means of said casing (4); and
- a longitudinal clamp (12) for applying, when in use, a longitudinal preloading force, perpendicular to the transversal preloading force, on the stack (3) by means of said casing (4),
wherein said transversal clamp (11) and said longitudinal clamp (12) are calibrated clamps, for applying predetermined preloading forces.
